# EUROPÄISCHE PATENTANMELDUNG

(11) **EP 1 564 610 A2**
(43) Veröffentlichungstag der Anmeldung: **17.08.2005**
(21) Anmeldenummer: 04107006.1
(22) Anmeldetag: 27.12.2004
(51) Int. Cl.: G05B 15/02

(54) **Mobile Kommunikationsvorrichtung zum Bedienen und/oder Beobachten einer Automatisierungskomponente**

(30) Priorität: 10.02.2004 DE 102004006509
(71) Anmelder: Siemens Aktiengesellschaft, 80333 München (DE)
(72) Erfinder: Hamm, Carsten, 91058 Erlangen (DE); Kiesel, Bruno, 91058 Erlangen (DE); Rosenberg, Jens Ansgar, 90459 Nürnberg (DE); Schubert, Martina, 90518 Altdorf (DE); Springer, Frank, 91224 Hohenstadt (DE)

(57) **Zusammenfassung**

Eine mobile Kommunikationsvorrichtung (5,6,58) ist zum Bedienen und/oder Beobachten einer Automatisierungskomponente (20,21,22,23) vorgesehen, wobei die mobile Kommunikationsvorrichtung (5,6,58) insbesondere ein Mobilfunkgerät (5) ist und wobei die mobile Kommunikationsvorrichtung (5,6,58) eine Einrichtung zur Datenkommunikation mit zumindest einer Automatisierungskomponente (20,21,22,23) insbesondere über Funk aufweist. Die mobile Kommunikationsvorrichtung (5,6,58) ist zur Freigabe und/oder Übertragung einer auf zumindest einer Automatisierungskomponente (20,21,22,23) ablauffähigen lizenzbedürftigen Software vorgesehen, wobei insbesondere die Freigabe lizenzbedürftigen Software mittels eines von der mobilen Vorrichtung an die Automatisierungskomponente (20,21,22,23) übertragbaren Lizenzschlüssels ermöglicht ist. Ferner ist eine mobile Kommunikationsvorrichtung (5,6,58) auch derart ausbildbar, dass die Position zu einer Automatisierungseinrichtung feststellbar ist. Auch entsprechende Verfahren sind realisierbar.

## Beschreibung

Die vorliegende Erfindung betrifft eine mobile Kommunikationsvorrichtung bzw. ein Verfahren zum Bedienen und/oder Beobachten zumindest einer Automatisierungskomponente. Die mobile Kommunikationsvorrichtung dient insbesondere zur Datenkommunikation mit zumindest einer Automatisierungskomponente insbesondere über Funk, Infrarot, bzw. auch anderen Übertragungstechniken. Die Automatisierungskomponente ist beispielsweise eine Speicher-Programmierbare-Steuerung SPS oder ein Antriebssystem, eine elektrische Maschine, ein Stromrichter, eine Steuerung einer Werkzeugmaschine, eine Steuerung einer Produktionsmaschine, ein Prozessautomatisierungssystem, ein Personal-Computer PC insbesondere zur Automatisierung, oder auch eine diesen Beispielen entsprechende Automatisierungseinrichtung bzw. eine industriellen Steuerung bzw. ein Computersystem.

Steuerungen sind beispielsweise in einem Engineeringssystem projektierbar und programmierbar. In einzelnen Engineeringschritten werden Steuerungsgrößen parametriert und verknüpft. Die daraus entstehenden Projekte einschließlich der Programme, Konfigurationen, Bilder, Bedien- und Beobachtungsvariablen etc., werden in der Regel in der Automatisierungskomponente, d.h. in der Steuerung oder in einem Antrieb, hinterlegt/gespeichert.

Vielfach sind Bediengeräte bzw. Beobachtungsgeräte - auch unter dem Namen HMI-Geräte (Human-Machine-Interface) bekannt - vorgesehen, mit denen insbesondere Steuerungen aber auch andere Automatisierungskomponenten anwenderfreundlich bedient werden können. Die HMI-Geräte dienen dabei insbesondere zur Visualisierung und Einstellung von relevanten Steuerungsgrößen.

HMI-Geräte können fest mit der Steuerung bzw. mit der Automatisierungskomponente verbunden oder aber auch mobil sein. Üblicherweise sind sie als proprietäre Geräte ausgeführt und werden vom Ersteller der Systemsoftware angeboten. Darüber hinaus werden aber auch beispielsweise Notebooks oder Standard-PCs als HMI-Geräte verwendet, die an das Datennetz angeschlossen werden, mit dem die Automatisierungskomponente verbunden ist.

Aus der EP 1 233 316 A2 ist beispielsweise eine Vorrichtung zum Bedienen und/oder Beobachten von Automatisierungskomponenten mit einer Kommunikationseinrichtung zur Datenkommunikation mit den Automatisierungskomponenten insbesondere über Funk und einer Datenverarbeitungseinrichtung zur Verarbeitung der empfangenen und zu sendenden Daten, wobei die Vorrichtung ein Mobilfunktelefon, ein Persönlicher Digitaler Assistent oder ein tragbarer Computer ist, bekannt.

Ferner ist hieraus eine Vorrichtung zum Bedienen und/oder Beobachten von Automatisierungskomponenten bekannt, wobei die Vorrichtung, welche z.B. ein Mobilfunktelefon ist, zum Erfassen von Bedieneridentifikationsinformation von einem Bediener zur Feststellung von dessen Autorisierung zur Bedienung der Automatisierungskomponenten vorgesehen ist. Mit der Autorisierungseinrichtung sind Bediengerätidentifikationsinformationen an die Automatisierungskomponenten und/oder an externe Server versendbar, so dass die Automatisierungskomponenten und/oder die externen Server die Autorisierung der Vorrichtung zum Bedienen prüfen können.

Auch aus der DE 101 47 744 A1 ist eine Telekommunikationseinrichtung zur Beeinflussung eines Automatisierungssystems bekannt. Einen Anwender ist es ermöglicht einen Prozess von einem entfernten Ort aus zu bedienen bzw. zu beobachten.

Die Funktionalität einer mobilen Kommunikationseinrichtung wie z.B. eines Mobiltelefons oder eines Taschencomputers oder ähnlichen ist dabei auf das Bedienen und Beobachten von Software bzw. eines Prozesses oder ähnlichen eingeschränkt.

Aufgabe der vorliegenden Erfindung ist es, die Funktionalität einer mobilen Kommunikationseinrichtung in Bezug auf zumindest eine Automatisierungskomponente zu verbessern.

Die Lösung der Aufgabe gelingt bei einer mobilen Kommunikationsvorrichtung nach einem der Ansprüche 1 bis 5 bzw. bei einer Automatisierungseinrichtung nach Anspruch 6 bzw. bei einem Verfahren nach einem der Ansprüche 7 bis 13. Die mobile Kommunikationsvorrichtung ist auch als mobile Kommunikationseinrichtung bezeichnet.

Die Lösung der Aufgabe gelingt insbesondere bei einer mobilen Kommunikationsvorrichtung - im folgenden auch als mobile Kommunikationseinrichtung bezeichnet - zum Bedienen und/oder Beobachten einer Automatisierungskomponente, wobei die mobile Kommunikationsvorrichtung insbesondere ein Mobilfunkgerät ist und wobei die mobile Kommunikationsvorrichtung eine Einrichtung zur Datenkommunikation mit zumindest einer Automatisierungskomponente insbesondere über Funk oder Infrarot oder dergleichen aufweist. Die mobile Kommunikationsvorrichtung ist zur Freigabe und/oder Übertragung einer auf zumindest einer Automatisierungskomponente ablauffähigen lizenzbedürftigen Software vorgesehen, wobei insbesondere die Freigabe lizenzbedürftigen Software mittels eines von der mobilen Vorrichtung an die Automatisierungskomponente übertragbaren Lizenzschlüssels ermöglicht ist.

Hierbei ist die mobile Kommunikationsvorrichtung wie z.B. ein Mobiltelefon (Handy) oder ein Handheld mit einer Einrichtung zur Datenkommunikation, ein Mittel z.B. zur Anforderung und/oder Aktivierung lizenzgebundener Funktionalitäten einer Automatisierungskomponente. Die Einrichtung zur Datenkommunikation ist insbesondere eine Sendeeinrichtung bzw. eine Empfangseinrichtung.

Verfahren zur Freigabe freigabebedürftige, d.h., insbesondere instanziierbarer Softwareprogramme sind allgemein bekannt. Ein derartiges System betrifft zumindest eine oder mehrere Automatisierungskomponenten, wie diese beispielsweise auf dem Gebiet der:
- Steuerung bzw. Regelung insbesondere von Werkzeugmaschinen bzw.
- Produktionsmaschinen bzw.
- Handhabungsautomaten bzw.
- anderen Automaten bzw. Systemen zur Automatisierung insbesondere von Prozessen bekannt sind. Derartige Softwareprogramme, insbesondere zur Steuerung bzw. Regelung zumindest eine Automatisierungskomponente sind vor unberechtigter Verwendung z.B. durch einen Softwareschutz zu sichern. Der Softwareschutz wird beispielsweise durch Eingabe eines Lizenzschlüssels als eine eindeutige Kennung in das System zur rechtmäßigen Benutzung des jeweiligen freigabebedürftigen Softwareprogramms deaktiviert. Das Softwareprogramm ist dadurch aktivierbar bzw. aktiviert. Solange der Softwareschutz nicht deaktiviert ist, kann das Softwareprogramm nicht oder nicht im vollen Umfang auf den jeweiligen Gerät, welches insbesondere eine Automatisierungskomponente ist, genutzt werden. Das Deaktivieren des Softwareschutzes entspricht damit einer Lizenzierung des jeweiligen Softwareprogrammes.

Ein anderes Verfahren des Softwareschutzes ist beispielsweise die Verwendung eines Dongles als Kopierschutzstecker, der an einem Gerät z.B. einer CNC-Steuerung an einer seriellen oder parallelen Schnittstelle anschließbar ist. Dadurch ist der Softwareschutz mit einer Hardware verknüpft, was unter anderem logistischen Aufwand erfordert.

Eine weitere Möglichkeit des Softwareschutzes ergibt sich z.B. durch die Verwendung von Disketten als Datenträger.

Bislang sind beispielsweise folgende Lizenzmodelle bekannt:
a) Maschinengebundene Lizenzierung: eine Maschine, d.h. eine Automatisierungskomponente erhält eine feste Freischaltung einer auf der Automatisierungskomponente lauffähigen Software mittels einer einmal bezahlten Lizenz
b) Netzwerkgebundene Lizenzierung: in einem Netzwerk, welches Automatisierungskomponenten aufweist ist eine bestimmte feste Anzahl von Lizenzen verfügbar.
c) Lizenzfreigabe per Hardware (Dongle).
d) "License on demand": Über Internetdienste werden Funktionalitäten z.B. für eine bestimmte Zeit freigegeben.

Mit Hilfe der mobilen Kommunikationseinrichtung, insbesondere mit Hilfe des Mobiltelefons, ist nun eine lizenzbedürftige Funktionalität einer Software freischaltbar. Zusammen mit der Freischaltung ist in einer vorteilhaften Ausgestaltung die Zahlung einer Gebühr verknüpft.

In einer vorteilhaften Ausgestaltung weist die mobile Kommunikationseinrichtung ein Identifizierungskennzeichen auf, wobei insbesondere eine Identifizierung der mobilen Kommunikationseinrichtung gegenüber der Automatisierungskomponente und/oder gegenüber einer externen Kommunikationspartners vorgesehen ist. Die Automatisierungskomponente ist beispielsweise in eine Maschine, wie z.B. eine Druckmaschine, integriert.

Der externe Kommunikationspartner ist beispielsweise ein Lieferant von Software, wobei der externe Kommunikationspartner für die Kommunikationsvorrichtung beispielsweise als ein Lizenzschlüsselserver ausgebildet ist.

Die Identifizierung der mobilen Kommunikationseinrichtung mittels des Identifizierungskennzeichens ermöglicht insbesondere auch die Ausbildung einer sicheren drahtlosen Kommunikationsverbindung zwischen der mobilen Kommunikationseinrichtung und der Automatisierungseinrichtung. Hierfür weist vorteilhafter Weise auch die Automatisierungseinrichtung ein ihr eigenes Identifizierungskennzeichen auf.

In einer weiteren vorteilhaften Ausgestaltung ist ein Lizenzschlüssel mittels der mobilen Kommunikationseinrichtung von einer Lizenzschlüsselquelle empfangbar, wobei die Lizenzschlüsselquelle insbesondere der externe Kommunikationspartner ist.

Des weiteren weist die mobile Kommunikationseinrichtung in einer weiteren Ausgestaltung eine Gerätenummer und/oder eine zugewiesene Telefonnummer auf, wobei die Übertragung des Lizenzschlüssels von:
a) der Gerätenummer und/oder
b) der Telefonnummer der mobilen Kommunikationseinrichtung und/oder
c) einer Gerätenummer der Automatisierungskomponente, welche an die mobile Kommunikationseinrichtung übertragbar ist, abhängig ist.

Die Verwendung eines Mobiltelefons als Mittel zur Lizenzanforderung ist dabei deswegen von Vorteil, weil die eindeutige Telefonnummer bzw. Gerätenummer des Mobiltelefons eine Zuordnung insbesondere zu einem Bediener erlaubt. Die erforderlichen Informationen über die Zielmaschine also die Automatisierungskomponente und die angeforderten Funktionen/Lizenzen sind vom Bediener zusätzlich übermittelbar. Eine Abrechnung der Lizenz kann in einfacher Weise über eine Telefonrechnung erfolgen.

Bei der Verwendung eines Mobiltelefons ergibt sich beispielsweise zumindest einer der folgenden Vorteile:
- Mobiltelefone sind zum festen Bestandteil des täglichen Lebens geworden somit ist die Bedienung eines Mobiltelefons nahezu jedem bekannt;
- viele Personen tragen stets ein Mobiltelefon mit sich,
- da die Kommunikation drahtlos erfolgt, ist die Handhabung sehr einfach und bequem;
- es müssen keine bzw. wenig weitere Schnittstellen bereitgestellt werden,
- da die Abrechnung vorteilhaft über einen Netzanbieter des Mobiltelefons erfolgen kann, ist keine weitere Einrichtung eines Kontos oder hoher Abrechnungsaufwand für Lizenzen notwendig; es entsteht also kein zusätzlicher Aufwand zur Abrechnung der Kosten.

Ist beispielsweise eine lizenzgebundene Funktionalität einer Maschine bzw. einer Automatisierungskomponente frei zu schalten, so kann dies z.B. schrittweise wie folgt ablaufen:
a) Bediener ruft Lizenzgeber an;
b) Lizenzgeber erkennt anhand von Geräte-/Telefonnummer den Eigentümer des Mobiltelefons;
c) Bediener übermittelt gewünschte Funktionalität für eine Maschine bzw. für eine Automatisierungskomponente;
d) Lizenzgeber erteilt Freigabe der Funktionalität und übermittelt diese an die Maschine bzw. die Automatisierungskomponente bzw. an das Mobiltelefon;
e) Lizenzgeber rechnet beispielsweise Lizenzgebühren über Telefongesellschaft ab.
   Dabei entspricht der Lizenzgeber einer Datenquelle wie z.B. einen Server für Lizenzinformationen. Der Bediener verwendet in diesem Verfahren die mobile Kommunikationseinrichtung.
   Ein weiteres mögliches Verfahren zur Freigabe lizenzgebender Funktionalitäten einer Maschine bzw. einer Automatisierungskomponente weist die folgenden Verfahrensschritte auf:
   a) Bediener ruft Lizenzgeber an;
   b) Lizenzgeber erkennt anhand von Geräte-/Telefonnummer den Eigentümer des Mobiltelefons;
   c) Bediener übermittelt gewünschte Funktionalität und Maschine;
   d) Lizenzgeber übermittelt Freigabecode auf das Mobiltelefon des Bedieners;
   e) Bediener überträgt Freigabecode von seinem Mobiltelefon auf die Maschine. Ein Mobiltelefon verfügt über verschiedene drahtlose Kommunikationskanäle (wie z.B. Infrarot, WLAN, Telefonkanal), die für die Übertragung genutzt werden können;
   f) Lizenzgeber rechnet Lizenzgebühren z.B. über Telefongesellschaft ab.

Dabei entspricht die Telefongesellschaft einem Datenverarbeitungssystem zur Gebührenermittlung für Telekommunikationsdienste.

In dem obig beschriebenen Umfeld ist es vorteilhaft, wenn sich eine Person gegenüber einer Automatisierungseinrichtung mittels der mobilen Kommunikationseinrichtung identifizieren kann. Bislang erfolgt eine Identifikation der Person beispielsweise auf eine der folgenden Weisen:
a) Eingabe von Benutzername und Kennwort über eine Tastatur an der Maschine.
b) Keycard/Schlüsselschalter.

Das Mobiltelefon ist als Mittel zur Identifikation gegenüber einer Automatisierungskomponente verwendbar. Die Identifikation erfolgt z.B. mit der dem Mobiltelefon zugeordneten Telefonnummer bzw. der Gerätenummer bzw. mit einer SIM-Karte.

Die Bedienungsfreigabe einer Automatisierungskomponente kann beispielsweise wie folgt beschrieben ablaufen:
a) Bediener ruft die Maschine an (die Maschine weist also eine Telefonnummer auf), wobei die Telefonnummer z.B. an der Maschine ablesbar oder im Handy gespeichert ist;
b) die Maschine erkennt anhand von Geräte-/Telefonnummer das Mobiltelefon bzw. dessen Eigentümers;
c) die Maschine prüft die Rechte des Eigentümers;
d) die Maschine gibt Rechte zur Bedienung frei.

Entsprechendes gilt allgemein für eine Automatisierungskomponente anstelle der Maschine.

Die Lösung der Aufgabe gelingt auch mittels einer mobilen Kommunikationseinrichtung, insbesondere mittels eines Mobilfunkgerätes, welche eine Einrichtung zur Datenkommunikation mit zumindest einer Automatisierungskomponente insbesondere über Funk aufweist, wobei die mobile Kommunikationseinrichtung einen Speicher zur Speicherung zumindest eines Benutzerprofils zum Bedienen und/oder Beobachtender Automatisierungskomponente aufweist.

Die mobile Kommunikationseinrichtung und insbesondere ein Mobiltelefon ist als Speicher von Benutzerprofilen verwendbar.

Ein Bediener speichert und übermittelt beispielsweise durch das Mobiltelefon seine individuellen Einstellungen.

Dies kommt den Wünschen von Anwendern entgegen die eine individuelle Bedienoberfläche benötigen. Diese soll an allen Geräten, d.h. Automatisierungskomponenten gleichartig eingerichtet sein. Verschiedene Benutzer haben jeweils eigene Einstellungen.

Demgegenüber sind derzeit insbesondere die folgenden Lösungen bekannt:
- Maschinengebundene Profile: die Einstellungen eines Benutzers sind nur auf einer Maschine verfügbar.
- Netzwerkgebundene Profile: die Einstellungen der Benutzer stehen über ein Netzwerk zur Verfügung.
- Ein Standardprofil für alle Anwender.

Dadurch ist ein Anwender vielen Einschränkungen unterworfen. Die Verwendung einer mobilen Kommunikationseinrichtung und insbesondere eines Mobiltelefons zur Profilverwaltung birgt wesentliche Vorteile. Beispielsweise sind die folgenden Funktionalitäten realisierbar:
- Das Mobiltelefon speichert das Benutzerprofil mit allen gewünschten Einstellungen und überträgt dies auf die Maschine bzw. die Automatisierungskomponente. Bei Änderung der Einstellungen können diese wieder von der Maschine bzw. der Automatisierungskomponente auf das Mobiltelefon übertragen werden.
- Ein Mobiltelefon verfügt über verschiedene drahtlose Kommunikationskanäle (wie z.B. Infrarot, WLAN, Telefonkanal), die für die Übertragung genutzt werden könne.
- Da die Kommunikation drahtlos erfolgt, ist die Handhabung sehr einfach und bequem. Es müssen keine weiteren Schnittstellen bereitgestellt werden.
   Eine Vorgehensweise bei der Verwendung eines Nutzerprofils ist beispielsweise derart ausgestaltbar, dass:
   a) der Bediener sich bei der Maschine bzw. der Automatisierungskomponente anmeldet;
   b) durch den Bediener das Benutzungsprofil vom Mobiltelefon per Infrarotschnittstelle an die Maschine bzw. an die Automatisierungskomponente übertragen wird und
   c) die Maschine bzw. die Automatisierungskomponente dem Bediener die angepasste Bedienoberfläche auf einer Bedien- bzw. Beobachtungseinrichtung anbietet.

Eine mobile Kommunikationsvorrichtung, insbesondere ein Mobilfunkgerät, welche eine Kommunikationseinrichtung zur Datenkommunikation mit zumindest einer Automatisierungskomponente insbesondere über Funk aufweist, ist also derart ausgestaltbar, dass die mobile Kommunikationsvorrichtung einen Speicher zur Speicherung zumindest eines Benutzerprofils zum Bedienen und/oder Beobachten der Automatisierungskomponente aufweist.

Die Aufgabe wird des weiteren gelöst mittels einer Automatisierungskomponente, welche eine Kommunikationseinrichtung zur Datenkommunikation mit zumindest einer mobilen Kommunikationseinrichtung, insbesondere einem Mobilfunkgerät aufweist, wobei die Position der mobilen Kommunikationskomponente bestimmbar ist und wobei die Position von der Automatisierungseinrichtung auswertbar ist. Die Positionsbestimmung gelingt z.B. mittels zweier Sender bzw. zweier Empfänger.

Dabei ist das Handy als Ortungsmedium verwendbar, wobei eine Maschine bzw. eine Automatisierungskomponente den Ort eines Bedieners feststellt. Damit ist es beispielsweise möglich, dass ein ortsfremder Bediener/Techniker eine bestimmte Maschine bzw. eine bestimmte Automatisierungskomponente finden bzw. lokalisieren kann.

Ferner ist ein System derart ausgestaltbar, das mittels einer Ortungseinheit die Position einer mobilen Kommunikationseinrichtung bzw. einer Automatisierungskomponente feststellbar ist und eine Information über die Position an die Automatisierungskomponente bzw. an die mobile Kommunikationseinrichtung übermittelbar ist.

Nach dem Stand der Technik findet ein ortsfremder Anwender bzw. Bediener sich heute nur z.B. durch:
a) einen Lageplan der Anlage bzw.,
b) Hilfe/Hinführung durch ortskundiges Personal in einer Anlage bzw. einer Maschine, welche auch eine Anlage darstellen kann zurecht.

Die Verwendung einer mobilen Kommunikationseinrichtung und insbesondere eines Mobiltelefons zur Positionsbestimmung schafft hier Abhilfe. Viele Netzbetreiber ermöglichen bereits heute Ortungsmechanismen zur Positionsbestimmung eines Mobiltelefons. Diese können dazu genutzt werden, einen Anwender/Bediener zu lokalisieren und zu leiten. Dies ist erfindungsgemäß insbesondere bei Großanlagen wie z.B. Chemiewerken, Stahlwerken oder Druckereien vorteilhaft ausnutzbar.

Dadurch dass Mobiltelefone zum festen Bestandteil des täglichen Lebens geworden und die Bedienung eines Mobiltelefons somit auch jedem bekannt ist, wobei heutzutage fast jeder sein Mobiltelefon bei sich trägt, erhält das Mobiltelefon im industriellen Umfeld bzw. Einsatz eine weitere Zusatzfunktion.

Bei einem Verfahren zur Überwachung einer Automatisierungskomponente wird mittels der Automatisierungseinrichtung die Position einer mobilen Kommunikationsvorrichtung bestimmt, wonach die mobile Kommunikationseinrichtung durch die Automatisierungskomponente gerufen wird, d.h. es wird eine Datenverbindung aufgebaut.

In einer vorteilhaften Ausgestaltung des Verfahrens wird von der Automatisierungskomponente an die mobile Kommunikationsvorrichtung eine Information zur Reduzierung der Distanz zwischen der mobilen Kommunikationsvorrichtung und der Automatisierungseinrichtung übermittelt. Diese Information ist beispielsweise eine Richtungsangabe oder eine Ortsangabe oder eine Karte mit einem eingezeichneten Weg zur Automatisierungskomponente.

Ist beispielsweise ein Automatisierungsgerät, welches eine Automatisierungskomponente aufweist defekt, so sind folgende Schritte ausführbar:
a) das Automatisierungsgerät bestimmt die Positionen aller verfügbaren Servicetechniker,
b) das Automatisierungsgerät ruft den Servicetechniker an, der sich in der Nähe befindet,
c) das Automatisierungsgerät dirigiert Servicetechniker zu sich.

Ein weiteres Beispiel für den Verfahrensablauf ergibt sich wie folgt:
a) ein Bediener ist an der Bedientafel einer Maschine eingeloggt.
b) der Bediener entfernt sich von Maschine.
c) die Maschine erkennt Überschreitung einer Abstandsgrenze.
d) die Maschine sperrt die Bedientafel.
Die Maschine entspricht hierbei zumindest einer Automatisierungskomponente.

Bei einem weiteren Verfahren zum Bedienen und/oder Beobachten einer Automatisierungskomponente auf welcher lizenzbedürftige Software ablauffähig ist, wobei zum Bedienen und/oder Beobachten eine mobile Kommunikationsvorrichtung, insbesondere ein Mobilfunkgerät verwendet wird, wird mittels der mobilen Kommunikationsvorrichtung eine Datenverbindung zu einer Datenquelle, insbesondere als Quelle für Lizenzschlüssel und/oder lizenzbedürftiger Software hergestellt. Danach wird von der Lizenzschlüsselquelle die mobile Vorrichtung, insbesondere mittels einer Gerätenummer der mobilen Kommunikationsvorrichtung und/oder mittels einer der mobilen Vorrichtung zugeordneten Telefonnummer identifiziert, wonach die von der mobilen Kommunikationsvorrichtung Nutzdaten von der Datenquelle angefordert werden und die Datenquelle die angeforderten Nutzdaten an die mobile Kommunikationsvorrichtung und/oder an die Automatisierungskomponente überträgt.

In einer vorteilhaften Ausgestaltung des Verfahrens werden Nutzdaten von der mobilen Kommunikationsvorrichtung an die Automatisierungskomponente übertragen werden.

Des weiteren ist das Verfahren derart ausgestaltbar, dass die Datenquelle und/oder das Mittel zur Übertragung der Nutzdaten Informationen über die übertragenen Nutzdaten bzw. über die Dauer der Übertragung der Nutzdaten speichert.

Vorteilhafter Weise wird auf der mobilen Kommunikationsvorrichtung, insbesondere einem Mobilfunkgerät, zumindest ein Benutzerprofil für die Automatisierungskomponente gespeichert, wobei das Benutzerprofil zur Automatisierungskomponente übertragbar wird.

Des weiteren ist die mobile Kommunikationseinrichtung derart ausbildbar, dass eine Bedienoberfläche zum Bedienen und/oder Beobachten einer oder mehrere Automatisierungskomponenten an das Benutzerprofil angepasst wird.

Bei einem Verfahren zur Überwachung einer Automatisierungskomponente wird durch die Automatisierungseinrichtung die Position einer mobilen Kommunikationsvorrichtung bestimmt, wonach die mobile Kommunikationseinrichtung durch die Automatisierungseinrichtung gerufen wird und wonach insbesondere die Automatisierungskomponente an die mobile Kommunikationsvorrichtung eine Information zur Reduzierung der Distanz zwischen der mobilen Kommunikationsvorrichtung und der Automatisierungskomponente übermittelt.

Dieses Verfahren hat den Vorteil, dass Bediener bzw. Servicepersonal schneller an eine Automatisierungskomponente führbar sind. Hierdurch lassen sich bei Reparaturen insbesondere Stillstandszeiten reduzieren, was zu Kosteneinsparungen führt. Bediener bzw. Servicepersonal kann Automatisierungskomponenten schneller auffinden.

Nachfolgend wird die Erfindung beispielhaft anhand der in den Figuren dargestellten Ausführungsbeispiele näher beschrieben und erläutert. Es zeigen:
- FIG 1: eine schematische Ansicht eines Systems zum Bedienen und Beobachten eines Prozesses,
- FIG 2: eine Bediensituation für Automatisierungskomponenten,
- FIG 3: ein Beispiel für eine Positionsbestimmung und
- FIG 4: den Übertragungsvorgang von Lizenzinformationen.

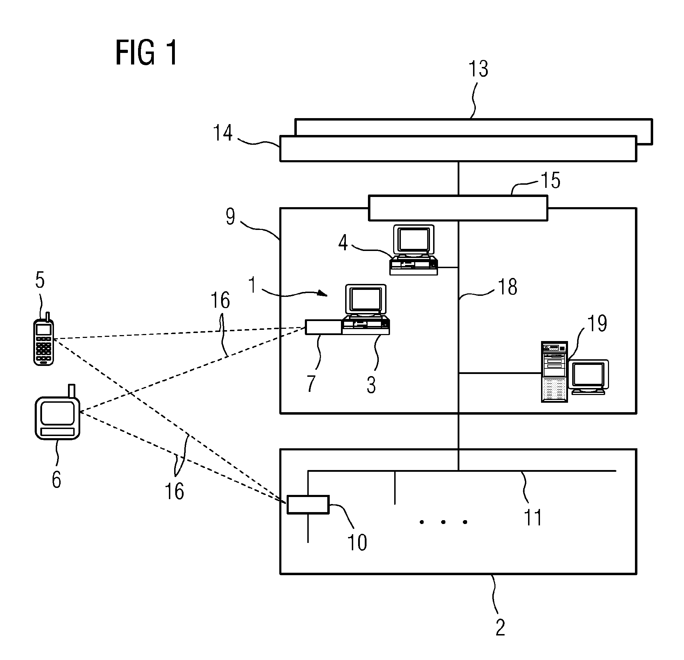

FIG 1 zeigt schematisch ein System zum Bedienen und Beobachten eines Prozesses. Dargestellt ist ein Prozessautomatisierungssystem mit einer Prozessebene 2 und einer Leitebene 9. Die Prozessebene 2 enthält die Komponenten des Prozessautomatisierungssystems, welche dem Prozess am nächsten sind. Solche Komponenten sind z.B. Automatisierungskomponenten wie beispielsweise eine speicherprogrammierbare Steuerungen 10, ein Aktor, ein Sensor und Ähnliches. Die Automatisierungskomponenten sind über einen Feldbus 11 miteinander datentechnisch verbunden. Die Prozessebene 2 ist mit der Leitebene 9 verbunden, welche im Ausführungsbeispiel ein Prozessvisualisierungssystem 1 mit verteilten Rechnern 3, 4 aufweist - auch dies sind Automatisierungskomponenten. Ein als ein Client ausgebildeter Rechner 3 ist mit einem als Server ausgebildeten Rechner 4 über ein örtlich beschränktes Kommunikationsnetzwerk, ein sogenanntes Local Area Network 18 (LAN) verbunden. An das Local Area Network 18 ist z.B. ein Kontrollsystem 15 angeschlossen. Das Kontrollsystem 15 weist z.B. Verbindungen zu einem Intranet 14 bzw. zum Internet 13 auf. Mit dem Prozessvisualisierungssystem 1 verbunden oder Teil des Prozessvisualisierungssystems 1 ist ein Kommunikationsmittel 7 insbesondere ein Telekommunikationsmittel, welches eine Kommunikation mit einer mobilen Kommunikationsvorrichtung zum Bedienen und/oder Beobachten 5,6 herstellen kann. Die mobile Kommunikationsvorrichtung ist beispielsweise ein Mobilfunkgerät 5 oder ein Handheldgerät 6. Ein Handheldgerät ist beispielsweise ein Personal Digital Assistance PDA mit eingebauten Mobilfunkeinrichtung. Das Kommunikationsmittel 7 ist beispielsweise ein Modem, eine ISDN-Karte, eine W-LAN-Karte, eine Blue-Tooth-Karte, eine Netzwerkkarte oder dergleichen. Zwischen dem Kommunikationsmittel 7 und der mobilen Kommunikationsvorrichtung 5, 6 ist insbesondere eine Funkverbindung 16 aufbaubar. Eine Funkverbindung 16 ist auch zwischen der mobilen Kommunikationsvorrichtung 5, 6 und einer Automatisierungskomponente wie einer speicherprogrammierbaren Steuerung 10 herstellbar. Der in FIG 1 nicht genauer dargestellte Prozess wird mit Hilfe der Automatisierungsgeräte der Prozessebene 2 gesteuert und überwacht. Mit speicherprogrammierbaren Steuerungen 10 werden Aktoren des Automatisierungssystems angesteuert und Sensoren abgefragt. Das vorgeschlagene System bietet nun auch die Möglichkeit, auch außerhalb dieser begrenzten Ausdehnung den Prozess zu bedienen und zu beobachten.

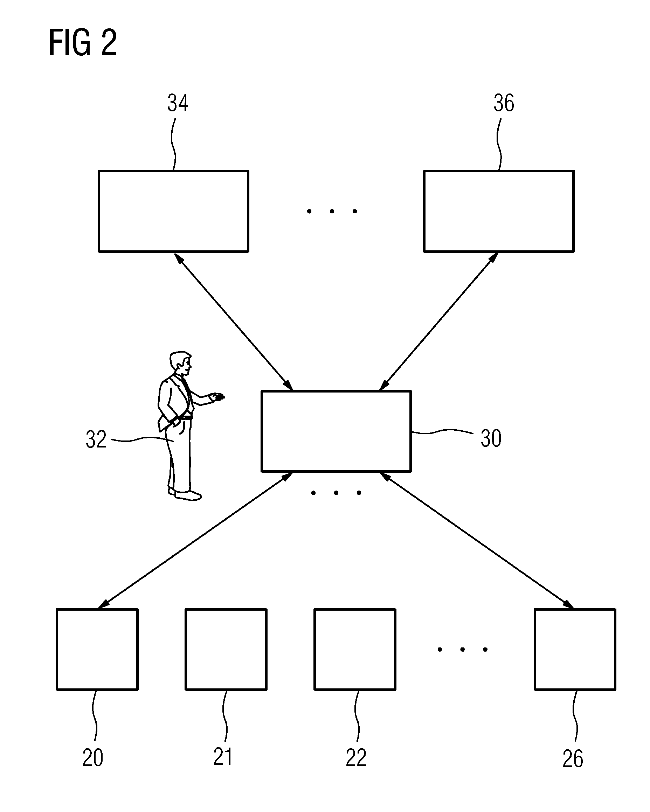

Die Darstellung gemäß FIG 2 zeigt den prinzipiellen Signalflussplan von Automatisierungskomponenten 20, 21, 22, 23, die von einem HMI-Gerät 30 (Human-Machine-Interface-Gerät) angesteuert werden. Ein Bediener 32 benutzt das HMI-Gerät 30, um die Automatisierungskomponenten 20, 21, 22, 26 in Betrieb zu nehmen, Einstellungen vorzunehmen, oder die Steuerungen zu warten. Das HMI-Gerät 32 kann zusätzliche Informationen von einem oder mehreren Anlagenservern 34, 36 beziehen. Der Anlagenserver kann z.B. als eigenständiger Server in dem HMI-Gerät oder in der Automatisierungskomponente liegen. Derartige Informationen wären beispielsweise Daten, Workflows oder Logfiles für die Protokollierung.

Unter dem HMI-Gerät wird insbesondere ein Einfach-HMI zur Nutzung für beispielsweise folgende Funktionen verstanden:
a) Inbetriebnahme-Funktionen:
   Die Inbetriebnahme der Steuerung oder des Antriebs erfordert die prinzipielle Einstellung und Anpassung eines Steuerungsprogramms für/an die Maschine. Die weitere Funktion der Applikationsinbetriebnahme erfordert maschinenspezifische Einstellungen bzw. Adaptionen an die jeweilige Maschine, worunter auch die Einstellung technologischer Größen fällt.
b) Produktionsbetrieb:
   Während des Produktionsbetriebs ist die Rezepturverwaltung und ggf. ein Rezepturwechsel notwendig. Hierzu ist beispielsweise das Produkt, die Stückzahl, der Produktionstakt und weitere Produkteigenschaften einzustellen. Ferner sollte während des Produktionsbetriebs ein Formatwechsel möglich sein, mit dem Einstellungen von
   Maschinengrößen, die für den Auftrag relevant sind, flexibel gestaltet werden können. Eine außerordentlich wichtige Funktion während des laufenden Betriebs ist die optische bzw. graphische Darstellung von Qualitätsdaten oder Produktionsdaten zur Überwachung.
c) Servicefall:
   Im Falle einer Störung sollte auch das Einfach-HMI in der Lage sein, in einem gewissen Maß Servicedaten anzuzeigen, damit die Störungen, ohne tief in das Runtimesystem einer Automatisierungskomponente einsteigen zu müssen, zielgerichtet behoben werden können.

Das Einfach-HMI ist vorteilhafter Weise mobil also eine mobile Kommunikationseinrichtung.. Dies setzt z.B. eine Funkverbindung voraus.

Leistungsfähige Telekommunikationsanlagen, z. B. UMTS-Systeme zur Übertragung von Multimedianachrichten, sind besonders geeignet, um eine hohe Funktionalität des HMI-Gerätes bereitzustellen. In die Automatisierungskomponente kann Serverfunktionalität integriert werden. So kann die Automatisierungskomponente beispielsweise als Webserver oder UMTS-Server dienen. Darüber hinaus kann ein überlagerter Webserver für mehrere Automatisierungskomponenten eingesetzt werden.

Erfindungsgemäß ist das HMI-Gerät insbesondere ein Mobilfunkgerät bzw. Handy. Mit dem Mobilfunkgerät (Handy) lässt sich die Automatisierungskomponente anwählen und automatisch eine Verbindung aufbauen. Im UMTS-Betrieb können so komplexe Multimedianachrichten ausgetauscht werden. Diese Nachrichten betreffen beispielsweise Positionsinformationen des Handys bezüglich der Automatisierungskomponente oder auch Daten zu Lizenzinformationen.

Falls eine Anlage mehrere Steuerungen und Antriebe umfasst, ist es für das Servicepersonal unter Umständen sehr aufwendig, sich in eine bestimmte Automatisierungskomponente einzuwählen. Daher werden dem Nutzer z.B. alle für ihn relevanten Automatisierungskomponenten auf der Anzeige des Mobilfunktelefons durch Symbole, Kurzbegriffe oder -nummern symbolisiert. Der Benutzer kann dann in die auf dem Handy visualisierte Automatisierungskomponente browsen, sofern ein geeigneter Browser in das Handy geladen wurde.

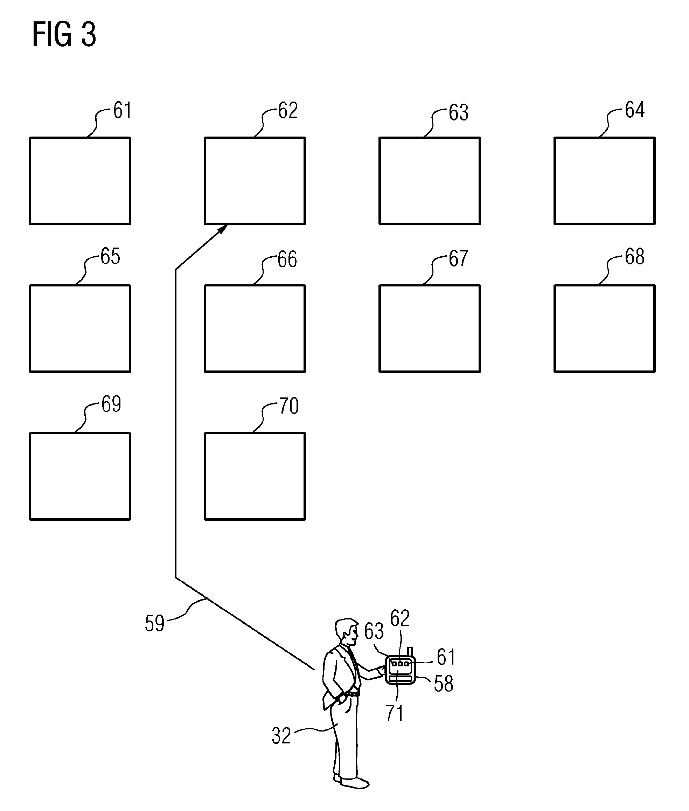

Die Darstellung gemäß FIG 3 zeigt einen Bediener 32, welcher eine mobile Kommunikationseinrichtung 58 mit sich führt. Der Bediener 32 befindet sich vor einer Reihe von Maschinen 61 bis 70. Will der Bediener 32 nun beispielsweise zur Maschine 62 gelangen so gibt er dies in die mobile Kommunikationseinrichtung 58 ein. Mittels Funkpeilung wird die Position des Bedieners 32 zur Maschine 62 ermittelt. Mittels eines Softwareprogrammes ist auf einem Display 71 ein Lageplan mit Symbolen für die Maschinen 61 bis 70 darstellbar, wobei dem Bediener ein Weg 59 z.B. zur Maschine 62 dargestellt wird.

Die Visualisierung relevanter Automatisierungskomponenten kann also auch dahingehend verfeinert werden, dass dem Bediener 32 auf einem Handy die räumlich nächstgelegene Automatisierungskomponente 61,...70 graphisch angezeigt wird. Dies kann beispielsweise dadurch erfolgen, dass das Symbol der nächstgelegenen Automatisierungskomponente größer, blinkend oder andersfarbig dargestellt wird. Das Messen der räumlichen Entfernung zwischen der Automatisierungskomponente und dem Handy bzw. mobilen HMI-Gerät kann z.B. auch durch ein GPS-System, Laufzeitbestimmung oder Signalschwächung erfolgen. Der Vorteil der Bestimmung der nächstgelegenen Automatisierungskomponente liegt z.B. darin, dass beispielsweise ein Servicemitarbeiter sofort erkennen kann, vor welcher der angezeigten Automatisierungskomponenten er sich befindet.

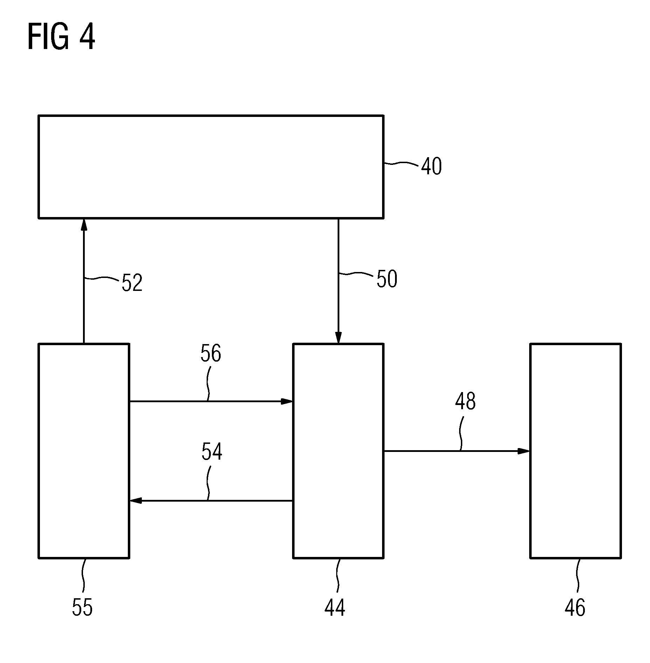

Die Darstellung gemäß FIG 4 zeigt einen möglichen Ablauf einer Freigabe einer freigabebedürftigen Software, welche sich auf der Maschine 46 befindet. Ein Anwender mit Mobiltelefon 44 schickt eine Lizenzanforderung 54 an einen Lizenzgeber 55. Der Lizenzgeber 55 sendet ein Lizenzdatum 56, also eine Lizenzinformation an den Anwender mit Mobiltelefon 44, von wo aus dieses Lizenzdatum 48 an die Maschine 46 weitergeleitet wird. Weiterhin sendet der Lizenzgeber 55 an einen Netzbetreiber 40 eine Rechnung 52 für das Lizenzdatum 48, 56. Diese Rechnung 52 wird als Rechnung 50 an den Anwender (Bediener) mit Mobiltelefon 44 weitergeleitet.

## Patentansprüche

1. Mobile Kommunikationsvorrichtung (5,6,58) zum Bedienen und/oder Beobachten einer Automatisierungskomponente (20,21,22,23), wobei die mobile Kommunikationsvorrichtung (5,6,58) insbesondere ein Mobilfunkgerät (5) ist und wobei die mobile Kommunikationsvorrichtung (5,6,58) eine Einrichtung zur Datenkommunikation mit zumindest einer Automatisierungskomponente (20,21,22,23) insbesondere über Funk aufweist,
**dadurch gekennzeichnet, dass** die mobile Kommunikationsvorrichtung (5,6,58) zur Freigabe und/oder Übertragung einer auf zumindest einer Automatisierungskomponente (20,21,22,23) ablauffähigen lizenzbedürftigen Software vorgesehen ist, wobei insbesondere die Freigabe lizenzbedürftigen Software mittels eines von der mobilen Vorrichtung an die Automatisierungskomponente (20,21,22,23) übertragbaren Lizenzschlüssels ermöglicht ist.

2. Mobile Kommunikationsvorrichtung (5,6,58) nach Anspruch 1,
**dadurch gekennzeichnet, dass** die mobile Kommunikationsvorrichtung (5,6,58) ein Identifizierungskennzeichen aufweist, wobei insbesondere eine Identifizierung der mobilen Kommunikationsvorrichtung gegenüber der Automatisierungskomponente (20,21,22,23) und/oder eines externen Kommunikationspartners vorgesehen ist.

3. Mobile Kommunikationsvorrichtung (5,6,58) nach Anspruch 1 oder 2,
**dadurch gekennzeichnet, dass** der Lizenzschlüssels mittels der mobilen Kommunikationsvorrichtung (5,6,58) von einer Lizenzschlüsselquelle empfangbar ist, wobei die Lizenzschlüsselquelle insbesondere der externe Kommunikationspartner ist.

4. Mobile Kommunikationsvorrichtung (5,6,58) nach einem der Ansprüche 1 bis 4, **dadurch gekennzeichnet, dass** die mobile Kommunikationsvorrichtung eine Gerätenummer und/oder eine zugewiesene Telefonnummer aufweist, wobei die Übertragung des Lizenzschlüssels:
a) von der Gerätenummer und/oder
b) von der Telefonnummer der mobilen Kommunikationsvorrichtung (5,6,58) und/oder
c) von einer Gerätenummer der Automatisierungskomponente welche and die mobile Kommunikationsvorrichtung (5,6,58) übertragbar ist
abhängig ist.

5. Mobile Kommunikationsvorrichtung (5,6,58), insbesondere ein Mobilfunkgerät (5), welche eine Kommunikationseinrichtung zur Datenkommunikation mit zumindest einer Automatisierungskomponente (20,21,22,23) insbesondere über Funk aufweist, **dadurch gekennzeichnet, dass** die mobile Kommunikationsvorrichtung (5,6,58) einen Speicher zur Speicherung zumindest eines Benutzerprofils zum Bedienen und/oder Beobachtender Automatisierungskomponente (20,21,22,23) aufweist.

6. Automatisierungskomponente, welche eine Kommunikationseinrichtung zur Datenkommunikation mit zumindest einer mobilen Kommunikationseinrichtung (5,6,58), insbesondere einem Mobilfunkgerät (5) aufweist **dadurch gekennzeichnet, dass** die Position der mobilen Kommunikationseinrichtung bestimmbar ist, wobei die Position von der Automatisierungskomponente (20,21,22,23) auswertbar ist.

7. Verfahren zum Bedienen und/oder Beobachten einer Automatisierungskomponente auf welcher lizenzbedürftige Software ablauffähig ist, wobei zum Bedienen und/oder Beobachten eine mobile Kommunikationsvorrichtung (5,6,58), insbesondere ein Mobilfunkgerät (5) verwendet wird wonach mittels der mobilen Kommunikationsvorrichtung (5,6,58) eine Datenverbindung zu einer Datenquelle, insbesondere als Quelle für Lizenzschlüssel und/oder lizenzbedürftiger Software hergestellt wird, wonach von der Lizenzschlüsselquelle die mobile Vorrichtung, insbesondere mittels einer Gerätenummer der mobilen Kommunikationsvorrichtung (5,6,58) und/oder mittels einer der mobilen Vorrichtung zugeordneten Telefonnummer identifiziert wird, wonach die von der mobilen Kommunikationsvorrichtung (5,6,58) Nutzdaten von der Datenquelle angefordert werden und die Datenquelle die angeforderten Nutzdaten an die mobile Kommunikationsvorrichtung (5,6,58) und/oder an die Automatisierungskomponente (20,21,22,23) überträgt.

8. Verfahren nach Anspruch 7,
**dadurch gekennzeichnet, dass** die Nutzdaten von der mobilen Kommunikationsvorrichtung an die Automatisierungskomponente (20,21,22,23) übertragen werden.

9. Verfahren nach Anspruch 7 oder 8,
**dadurch gekennzeichnet, dass** die Datenquelle und/oder das Mittel zur Übertragung der Nutzdaten Informationen über die übertragenen Nutzdaten bzw. über die Dauer der Übertragung der Nutzdaten speichert.

10. Verfahren zum Bedienen und/oder Beobachten einer Automatisierungskomponente (20,21,22,23) wonach auf einer mobilen Kommunikationsvorrichtung, insbesondere einem Mobilfunkgerät (5) zumindest ein Benutzerprofil für die Automatisierungskomponente (20,21,22,23) gespeichert ist und das Benutzerprofil zur Automatisierungskomponente (20,21,22,23) übertragen wird.

11. Verfahren nach Anspruch 10,
**dadurch gekennzeichnet, dass** eine Bedienoberfläche zum Bedienen und/oder Beobachten einer oder mehrere Automatisierungskomponenten (20,21,22,23) an das Benutzerprofil angepasst wird.

12. Verfahren zur Überwachung einer Automatisierungskomponente (20,21,22,23) wonach die Automatisierungseinrichtung die Position einer mobilen Kommunikationsvorrichtung bestimmt wonach die mobile Kommunikationseinrichtung durch die Automatisierungseinrichtung gerufen wird.

13. Verfahren nach Anspruch 12,
**dadurch gekennzeichnet, dass** die Automatisierungskomponente (20,21,22,23) an die mobile Kommunikationsvorrichtung (5,6,58) eine Information zur Reduzierung der Distanz zwischen der mobilen Kommunikationsvorrichtung und der Automatisierungskomponente (20,21,22,23) übermittelt.
